# EUROPEAN PATENT APPLICATION

(11) **EP 3 546 646 A1**
(43) Date of publication of application: **02.10.2019**
(21) Application number: 17856867.1
(22) Date of filing: 24.02.2017
(51) Int. Cl.: D21H 21/48, G06K 19/077

(54) **PROCESS FOR PRODUCING PAPER WITH AN INTEGRATED CHIP, PRODUCT THUS OBTAINED AND USE OF SAME**

(30) Priority: 30.09.2016 MX 2016012889
(71) Applicant: Validation Security Technology Identification S De RL De CV, 11650 Ciudad de Mexico (MX)
(72) Inventor: ROMERO GARCÍA, Marco Vinicio, 07780 Ciudad de México (MX)
(74) Representative: Fernández-Pacheco, Aurelio Fernández
(86) International application number: PCT/MX2017/000020
(87) International publication number: WO 2018/062982

(57) **Abstract**

The present invention relates to the industry for manufacturing all-use paper, with the feature of allowing the traceability of any product made with this paper, container, packet or sheets of any document. The process is characterised by the following steps: 1) washing the pulp; 2) cooking the woodchip; 3) stretching on a table; 4) integrating a chip with a built-in HF, UHF, LF or Bluetooth antenna or any RFID variant; 5) embedding the integrated chip is followed by 6) drying on a reel; and 7) adding dyes and bleaching agents, which can be starch or latex, to the stucco and passing same along a UV (infrared) lamp for drying.

## Description

### FIELD OF THE INVENTION

The present invention is related to the manufacturing industry of paper for use with all the feature of allowing tracking of any product produced with this paper, container, packaging or sheets of any document.

### BACKGROUND OF THE INVENTION

In the manufacture of paper with integrated chip, they described many documents. For example, in US Patent 5,566,441 discloses integrated circuits such as transponders called, which are attached to a substrate such as cardboard packaging material. The document mentions that an integrated circuit is adhered to the substrate and includes an antenna assembly, and a sealing layer over the integrated and at least a portion of the antenna circuit is applied. In some embodiments, it can be formed in the substrate where indexing circuit is placed. The antenna can be a screen printed on the substrate and the integrated circuit, using conductive ink or may be a metal film is applied to the substrate and chip. It is also indicated that where the integrated circuit is a transponder, this can be programmed with an identification code before or after having been adhered to the substrate.

The structure disclosed in this US patent does not account that in many machines and operations performed on the paper requires that the chip and the antenna does not protrude from the upper face of the paper so that it does not get stuck in the machine or during the operation carried out on paper. In addition, the step of forming the housing and place the chip in said housing is an operation that requires a lot of precision.

US patent 6,481,631 to Poustis, discloses a structure in which the substrate may be paper or corrugated cardboard, with greater possibilities could be corrugated cardboard. In this patent, as in the above, it handles a way of incorporating a CI a fiber substrate. Implicitly discloses the idea of a paper with an integrated circuit embedded in the matrix. Discloses a substrate provided with at least part of a system for identification, contactless several items. This assembly includes a receiving device and transmitting electromagnetic waves coupled with an electronic module that makes it possible to process the signals received and retransmit other signals. The substrate is based on cellulose fibers and the electronic device is inserted into the substrate. also discloses a process for manufacturing said substrate. The problem for imbibing CI is achieved with a structure to form a housing for placing therein said CI. It is resulting in complicated process and a complex structure.

Another patent, US 6,667,092, discloses a structure result in a simple manufacturing to integrate a CI in the structure of a corrugated cardboard, which can be used for packaging various articles. More specifically a corrugated structure having a first and a second linerboard, i.e. first and second lightweight or medium paper used in covers, outer faces of corrugated board is disclosed. It is called kraftüner when manufacturing with virgin, raw or bleached sulphate paste (kraft), typically with iferas. The quality in which the manufacture of recycled fibers are used is called testliner, often consisting of two layers. These two layers have a corrugated medium. This structure further comprises an RF processor coupled between one of the linerboard and the corrugated in its central part.

The processor can be positioned at an inlet or tag, which may also include an antenna. A method of forming a corrugated with an embedded RFID processor may be providing a sheet of linerboard and positioning an RF processor between the linerboard and the corrugated middle and fix the linerboard and the corrugated together with the RF processor positioned between them. An assembly line for forming a corrugated structure comprises a supply of a first linerboard sheet, a second sheet of linerboard, a stock of corrugated paper, a tape having an RF processor and coupled to this antenna. The assembly line also includes a corrugator facer a single, a double facer, an applicator of a tape and a cutter introduction. The applicator is for coupling the introducer introducers indented central.

The inconvenience of this process is that is directed to a corrugated cardboard material and could not be applied to a sheet of Kraft paper or bond, for example.

The most relevant document is US Patent Application 2004/0154766, which is disclosed and is intended to protect a method of manufacturing an article comprising a layer of fibers and at least one electronic chip, the fiber layer is formed with deposition of fibers on a surface immersed in a dispersion of fiber material. The method includes the following steps: using an elongate flexible support to move the chip to have contact with the fiber layer that is forming.

This manufacturing process has the disadvantage that it requires a tape where the chips are adhered to place them within the paper. Regardless of how thin it this tape increases the thickness of the chip and adhered to the substrate thickness; the paper must be of a larger dimension.

Furthermore, when required to have more than one chip on a substrate surface given, and has to place these randomly chips, may require more than one tape, because while along the paper can be placed the chip in any area forming a line across the width, i.e. in the direction orthogonal to one of the tapes, will require several tapes with the obvious drawbacks.

Above all, this process requires that the roller is heated so that the cellulose fibers forming the layer subsequently being paper and the heat, energy transfer, can affect the chip, depending on many things, paper thickness, time contact with the hot zone chip, chip sensitivity to heat, among the most important.

A process that eliminates the inconvenience of heat in a paper chip, will greatly improve the state of the art.

### OBJECTIVES OF THE INVENTION

One objective of the invention is to achieve a paper with electronic chip that should not be very thick to accommodate within it said chip.

Another object of the invention is to achieve a process that allows a paper with a thickness that depends only on the thickness that could represent the chip with its antenna.

Still another objective is to achieve a production process, and paper, low cost and simplicity in its structure, reducing the complexity of it.

Another object is to provide a paper whose strength is not compromised by the inclusion of an element that generates interfaces weakening.

Yet another objective is to achieve a production process of paper on which the security of the chip will not affect the process increases.

And all those objectives and advantages will become apparent by reading this description, accompanied by the drawings for illustrative purposes, but not limiting, are annexed to this, to form an integral part thereof.

### BRIEF DESCRIPTION OF THE INVENTION

The present invention has two aspects, on one hand are two processes papermaking with integrated chip and the other is the paper obtained with these processes.

One process is a mechanical process:
- Mechanical process.

Once the pulp washing is terminated after the cooking process of wood chips, goes to the table and stretching is where the inlay (chip with integrated antenna HF, UHF, LF, Bluetooth or any brave Integra RFI D), after embedded continues its drying on the reel.

Finally it is added in coating pigments, optical brighteners which may be starch or latex and passed through UV (infrared) lamp to dry, the coating process allows the fibers and bound not separate and encapsulate the chip without the possibility to remove it because it is completely embedded in the paper.

The other is a traditional process, where:
The recovered fibers previous papers entering the tub hydration which is accomplished with plain water or low salinity water having to be 90% water 10% fiber.

In such Tina triturated by steel blades I got to the pulp in the desired consistency.

Completing the hydration process passes fa primary separation of the pulp by means of metal or plastic similar to silk screen mesh opening, this opening point in the mesh allow us to get very thin layers of pulp.

The first layer of pulp passing through said mesh and the inlay (chip with integrated antenna HF, UHF, LF, Bluetooth or RFID variant) is added and placed on felt and immediately another layer of pulp is added above this and He manages the encapsulation of the chip, moreover felt is placed over the entire product and pressure is exerted by means of a mechanical plate to achieve water filtration and get the fibers together are linked. Finally dried in the open and passed through another finishing press for cutting.

Although not part of the invention needless to say, the main function of this device is encrypted communication sharing the transmitter and receiver through embedded in the paper, translated with software single protocol and in turn authentication chip written content on the validated document electronically by the software. This electronic validation in the invention may be a Java applet, which is an applet written in the Java programming language. Java applets can run a useful web browser raising the Java Virtual Machine (JVM), or applet viewer Sun. An applet is a component of an application running in the context of another program, for example in a web browser. The applet must run in a container, which provides a host program, through a plugin or applications such as mobile phones that support the model of prog ramming by "applets".

A difference of a program, an applet cannot run independently, provides graphical information and sometimes interacts with the user, typically it lacks session and have restricted security privileges. An applet usually performs a very specific function that lacks independent use. The term was introduced in AppleScript in 1993.

### BRIEF DESCRIPTION OF THE FIGURES

Figure 1 illustrates an application of paper chip object of the present invention, the paper with the embedded chip.
Figure 2 illustrates a process of placing chip on the table stretching where you can see the chips in different state of "submersion" effect of the shaking motion of the table.
Figure 3 shows a cross section of paper with embedded chip showing full immersion on paper.

### DETAILED DESCRIPTION OF THE INVENTION

The invention is the process and the final product integration chip intelligent embedded in a natural paper sheet, for reading with different devices such as smart phones and/or RFID antennas.

As to the aspect of the manufacturing process, the present invention comprises two embodiments thereof, one which is a machining process, and another is a traditional process. In the machining process, immediately after the pulp washing is completed after firing processes of wood chips, goes to the table and stretching is where the inlay (chip with integrated HF antenna, UHF, LF, Bluetooth or any brave RFID), embedded after the drying process continues on the reel.

This stretch is achieved by movements of the table, which by way of a screen, but mesh size very, very small, of the type of mesh used in screen printing, make the cellulose fiber is maintained on the mall to, and suffer water percolation, and dispersed medium (cellulose) and the dispersion medium (water, with or without dissolved chemicals) are separated.

In this process the theological characteristics of the dope and shaking movements exploit the table stretching carried out to dip chips in what will subsequently be the role.

As methods of solid/liquid separation without heat, the process is cheaper, since the mechanical equivalent of heat is amply demonstrated.

Once the chip or embedded chips, is added in coating pigments, whiteners may be starch or latex and passed through UV (infrared) lamp to dry, the coating process allows the fibers and bound to not separate nor encapsulate the chip without any possibility to remove it because it is completely embedded in the paper.

In the traditional process, the recovered paper fibers are inserted at hydration tub which is accomplished with plain water or low salinity water, having to be 90% water by 10% ibre. It is clear that these papers reuse must have been cleaned, removing foreign matter such as ink and other substances than the paper itself.

In said tub is crushed by steel blades even managed to pulp in the desired consistency. Clearly, this grinding must meet the characteristic of dispersing the cellulose fibers, but they break too, achieving fibers having adequate length to achieve acceptable mechanical properties of paper.

Terminating the hydration process, the suspension passes to the primary separation of the pulp by means of metal or plastic similar to silk screen mesh opening, this opening point in the mesh allow us to get very thin layers of pulp.

The first layer of pulp passing through said mesh and inlay chip with integrated antenna HF, UHF, LF, Bluetooth or any RFID variant) and placed on felt and immediately another layer of pulp is added above this is added and the encapsulation of the chip is achieved, moreover felt is placed above the entire product and pressure is exerted by a mechanical medium iron to achieve water filtration and get as fibers together are linked. Finally dried outdoors and passed on the other finishing press for cutting. The pressure applied on the paper with the chip does not affect the chip since the cellulose dough serves as buffer alone flows all around chip and its antenna.

Today, with the technological developments that have had the media, where they have smartphones, tablets and devices that are computers of small dimensions, as well as media through CELU lar system, the information superhighway or through communication over short distances (Bluetooth, for example), most of the information and analytical software and protocols of information, need not be in the embedded chip.

The embedded chip can have as little information as a short string of characters, and reading this string, processing in detailed information, the encrypted or decrypted, and use this information, it will take place in a device of larger capacity.

With this, the chip is very small, cheap and durable and can fit into the thickness of a sheet of thin paper. That is a very simple and inexpensive electronic element, since it is a passive element and does not require a large storage capacity.

The communication, validation and operational security of being able to read through a cell phone or an RFID antenna a document, potentiates it by improving the security of what's written. The leaves can now exist with different chemicals to adulterate erasing what was written in them, with our product validation and authenticates and since it is not allowed to erase the information once the chip once encrypted.

One additional advantage is that with this size of chip and antenna, these are not visible with the naked eye and disposal, in addition to be detected if missing, is difficult; and would signal extraction, because it has some surface although its thickness is small.

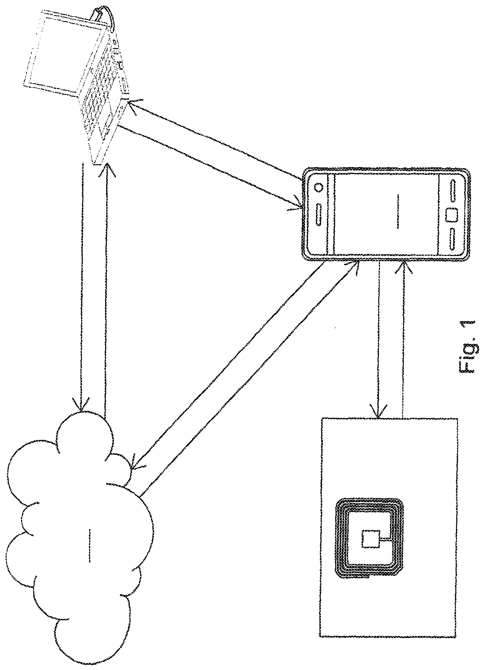

With the assembly shown in figure 1, where 1 is the paper, 2 is the chip 3 is the read element, communication and sometimes analysis and information storage. 4 could be any device or cloud storage for processing of information. With this, written and electronic validation is achieved, the location and communication between the devices (radio sheet, telephone or receiving antenna) further protection that gives being embedded in a piece of paper besides this validated by a software protocol only.

For a technician with ordinary skill in the art will become clear many applications of this paper chip, it can be used on security paper, such as paper currency, official documents, valuable documents such as deeds, invoices, certificates, currently, for various reasons have not used a paper chip, but the role object of the present invention, use is feasible.

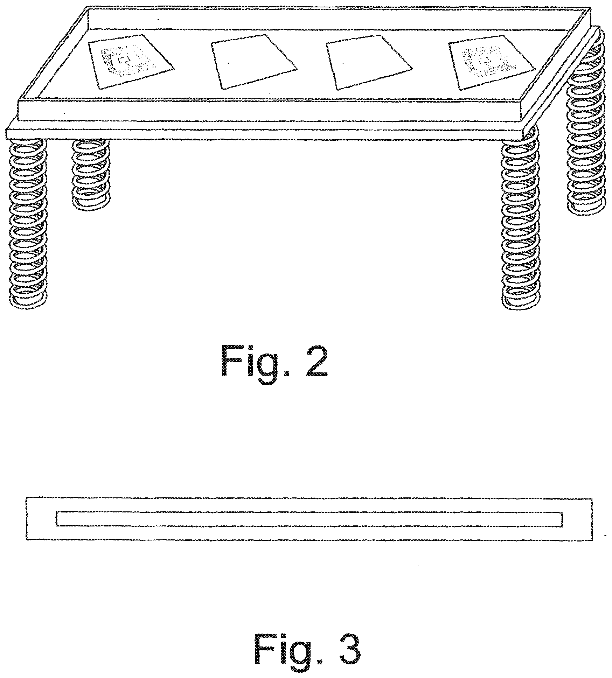

Figure 2 illustrates a process of placing chip on the table stretching where you can see the different chips in state "submersion" effect of the shaking motion of the table. The paper thickness is enlarged but tried to respect the proportions. The chips 5 are first placed and then 6 are the last.

With this way to make the paper and place the integrated circuits in the cellulose mass, the integration of the integrated can be carried out variably in two cartesian axes. You can also control the degree of penetration, that is, the third dimension, by controlling the dwell time of the mass in the table stretching. Depending on the concentration and thus the density and viscosity of the paste, the more time in the table, its penetration is greater, being able to transfer all the pasta.

Figure 3 shows a cross section of paper with embedded chip showing full immersion on paper.

As mentioned, the chip which is integrated into the present invention has the quality of being inexpensive and of small dimensions, containing little storage capacity. The main function of this device is the encrypted communication shared by the sender and receiver via embedded in the paper, translated with software only protocol and in turn authentication written content on the document electronically validated by the software chip.

Communication, validation and operational security of being able to read through a cell phone or an RFID antenna a document potentiates it by improving the safety of the what's written. The leaves can now exist with different chemicals to adulterate erasing what was written in them, with our product and authenticates validation ensures it does not allow encrypted information once the chip is cleared.

Written and electronic validation, location and communication between devices (transmitter or receiver antenna-Telephone sheet) in addition to the protection provided by being embedded in a sheet of paper in addition this software validated by a single protocol.

The invention has been sufficiently described so that a person with average knowledge in the matter may reproduce and obtain the results mentioned in the present invention. However, any skilled in the technical field to which the present invention may be able to make modifications not described in this application person that the application of such modifications in a determined structure or in the manufacturing process thereof, it requires the subject matter claimed in the following claims, such structures must be within the scope of the invention.

## Claims

1. Production process of paper with integrated chip **characterized by** the steps of 1) pulp washing, 2) cooking wood chips, 3) stretching in the table 4) integration chip with integrated antenna HF, UHF, LF, Bluetooth or RFID, 5) after the embedding of variant CI, still 6) drying process on the reel; 7) is added in coating pigments, whiteners may be starch or latex and passed through UV (infrared) lamp to dry.

2. Paper chip integrated characterized consist of a paper on which the chip is lost, in the sense that it is not attached to any tape.

3. A system in which the paper claimed in the preceding claim, **characterized by** comprising a means of communication with the chip paper content, on the one hand is applied, and the cloud or other storage medium data and set of instructions for the management and analysis of information on the other side.

4. System in which the paper claimed in the preceding claim is applied, as claimed in the preceding claim, **characterized in that** the communication function, the transmit and receive information, and analysis can be contained in one device.

5. A system in which the paper claimed in the preceding claim is applied, as is claimed in the preceding claim, **characterized in that** the device with the function of communication, the transmission and reception of information, and the analysis is selected from a smartphone and a tablet.
